# EUROPÄISCHE PATENTSCHRIFT

(11) **EP 0 960 229 B1**
(45) Veröffentlichungstag und Bekanntmachung des Hinweises auf die Patenterteilung: **11.09.2002**
(21) Anmeldenummer: 98910581.2
(22) Anmeldetag: 04.02.1998
(51) Int. Cl.: D06B 1/08, D06B 11/00, F16K 11/087

(54) **VORRICHTUNG ZUM AUFTRAGEN EINES BEMUSTERUNGSMITTELS AUF EINE BAHN**
DEVICE FOR APPLYING A PATTERNING AGENT TO A LINE
DISPOSITIF POUR L'APPLICATION D'UN AGENT POUR LA REALISATION D'UN MODELE SUR UNE BANDE CONTINUE

(30) Priorität: 12.02.1997 DE 19705258
(43) Veröffentlichungstag der Anmeldung: 01.12.1999
(73) Patentinhaber: Eduard Küsters Maschinenfabrik GmbH & Co. KG, 47805 Krefeld (DE)
(72) Erfinder: AHRWEILER, Karl-Heinz, D-47877 Willich (DE); GRÜBER, Heinz, D-47918 Tönisvorst (DE); KELLER, Alfred, D-47877 Willich (DE); SCHUMACHER, Walter, D-53076 Aachen (DE)
(74) Vertreter: Palgen, Peter, Dipl.-Phys. Dr.
(86) Internationale Anmeldenummer: DE9800306
(87) Internationale Veröffentlichungsnummer: WO98036121

(56) Entgegenhaltungen:
- EP-A- 0 193 085
- DE-A- 2 900 712
- DE-A- 3 315 770
- DE-U- 9 218 012
- FR-A- 2 539 204
- US-A- 2 558 260

## Beschreibung

Die Erfindung bezieht sich auf eine Vorrichtung der dem Oberbegriff des Anspruchs 1 entsprechenden Art.

Aus der DE 33 15 770 C2 ist eine Vorrichtung bekannt, bei der die Warenbahn eine Teppichbahn ist, die mit dem Pol nach oben unter einem Auftragsbalken vorbeiläuft, in welchem ein nach unten offener Auftragsschlitz ausgebildet ist. Auf der dem Auftragsschlitz gegenüberliegenden Seite wird die Warenbahn durch ein nachgiebiges Kissen, welches am Rücken der Teppichbahn anliegt, abgestützt. Das Bemusterungsmittel ist in dem Ausführungsbeispiel ein Schaum, der dem Auftragsschlitz an mehreren über seine Arbeitsbreite verteilten Stellen zugeführt wird. Der Schaum wird den einzelnen Stellen über separate Zuleitungen aus einem Verteiler zugeführt. Dem Verteiler in Strömungsrichtung vorgeschaltet sind Ventile, mittels deren dem Verteiler einmal Schaum aus einem ersten Schaummischer, das andere mal Schaum aus einem zweiten Schaummischer zugeführt werden kann.

Nach dem in der DE 33 15 770 C2 dargestellten Prinzip sind Ausführungsformen praktisch realisiert worden, bei denen die Teppichbahnen mit dem Pol nach unten über einen nach oben ausmündenden Auftragsschlitz liefen und das Bemusterungsmittel eine Färbeflotte war.

Wenn bei einer Anordnung nach dem Prinzip der DE 33 15 770 C2 ein Wechsel des Bemusterungsmittels stattfinden soll, z.B. ein Übergang von einer ersten Farbe auf eine nächste, so wird die zwischen den Umschaltventilen und der Austrittsstelle des Bemusterungsmittels aus dem Austrittsschlitz in den Leitungen zwischen den Umschaltventilen und dem Verteiler, in dem Verteiler selbst, in den Zuleitungen und in den einzelnen Kanälen des Auftragsbalkens befindliche Menge an Bemusterungsmittel durch die nachfolgende Menge verdrängt. Dabei treten Vermischungen der beiden Bemusterungsmittelmengen auf, die dazu führen, daß es auf der Warenbahn keine scharfe Grenze, sondern einen Übergangszustand gibt, in welchem Mischtöne entstehen, die Ausschuß oder Ware minderer Qualität ergeben. Die Längenabschnitte der Warenbahn mit derart geminderter Qualität können in der Größenordnung von einem Meter oder mehr liegen.

Die Entwicklung in der heutigen textilen Ausrüstung geht jedoch zu immer kürzeren Metragen bis hinab zu hundert Metern. Ausschußlängen von einem oder mehreren Metern bedeuten schon merkliche Verluste an teurer Teppichware. Es besteht daher das Bestreben, die bei Vorrichtungen der beschriebenen Art auftretenden Verluste beim Übergang auf ein anderes Bemusterungsmittel zu vermindern.

Eine in diesem Sinne Verbesserungen ergebende Weiterentwicklung einer Auftragsvorrichtung ist Gegenstand der dem Oberbegriff zugrundeliegenden DE 29 00 712 A1, bei der die Warenbahn über einen Drucktisch geführt ist und der mit dem Auftragsschlitz versehene Auftragsbalken in einer Ausführungsform unmittelbar auf der Warenbahn aufsitzt. In dem Auftragsbalken ist für jede einzelne Zuleitung dicht vor dem Austrittsschlitz ein elektrisch betätigbares Ventil vorgesehen.

Die Strecke von der Schließstelle des Ventils bis zur äußeren Mündung der Auslaßzone, d.h. bis zur Berührungsstelle des Bemusterungsmittels mit der Warenbahn, wird dadurch kurz und die darin verbliebene Restmenge des Bemusterungsamittels klein. Bei einem Wechsel des Bemusterungsmittels wird lediglich die relativ geringe zwischen Ventil und Warenbahn noch sitzende Menge an Bemusterungsmittel verdrängt und kann zu Vermischungen Anlaß geben. Die Übergangslänge auf der Warenbahn verkürzt sich hierdurch erheblich. Der Ausdruck "unmittelbar" soll im Sinne des technisch Realisierbaren verstanden werden, d.h. der Abstand zur Austrittsstelle soll so gering sein, wie es technisch durchführbar ist.

Gleichzeitig bringt die Zuführung des Bemusterungsmittels über eine Vielzahl über die Warenbahnbreite verteilter einzelner Ventile eine wesentliche Verbesserung der Gleichmäßigkeit der Auftragsmenge pro Flächeneinheit quer zur Bahn mit sich, weil strömungsbedingte Druckabfälle, etwa zu den Rändern'der Warenbahn hin, unterbleiben.

Ein wichtiger Zusatzaspekt besteht darin, daß durch die Aufteilung der Zuführung auf eine Vielzahl von einzelnen Ventilen, denen jeweils ein Abschnitt der Auslaßzone zugeordnet ist, nicht nur der Auftrag im ganzen, d.h. über die ganze Breite der Warenbahn, umgeschaltet werden kann, um von einer Uni-Bemusterung, d.h. im allgemeinen Uni-Färbung, auf die nächste überzugehen, sondern entsprechend der Zahl der Ventile schmälere Breitenbereiche zu verschiedenen Zeitpunkten umgeschaltet werden können, so daß eine eigentliche Bemusterung zustandekommt. Auch hierfür ist der verkürzte Übergang von einem Bemusterungsmittel auf das nächste von großer Bedeutung, weil erst dadurch relativ scharf begrenzte rechteckige Musterfelder zustandekommen, die zusammen das Muster ergeben.

Bei der bekannten Ausführungsform ist für jede einzelne Zuleitung ein separates Ventil vorgesehen und führen die Zuleitungen als Schrägbohrungen durch den Gleitschuh des Auftragsbalkens zu dem Auftragsschlitz.

Der Erfindung liegt die Aufgabe zugrunde, den damit verbundenen baulichen und fertigungsmäßigen Aufwand durch eine entsprechende Ausgestaltung der gattungsgemäßen Vorrichtung zu verringern und gleichzeitig die Funktion zu verbessern.

Diese Aufgabe wird durch die in Anspruch 1 wiedergegebene Erfindung gelöst.

Der Auslaßkanal ist hierbei in Strömungsrichtung des Bemusterungsmittels in die Auslaßzone gerichtet, so daß die durch die Vielzahl der Ventile hindurchtretenden Einzelmengen des Bemusterungsmittels bzw. der Bemusterungsmittel parallel zueinander in die Auslaßzone eintreten und insoweit die Tendenz zur Vermischung in den benachbarten Bereichen bei Durchströmen der Auslaßzone minimalisiert ist.

Der Ventilkörper ist in einer zylindrischen, zu der Drehachse koaxialen Ventilkammer des Auftragsbalkens angeordnet, wobei jedem Ventil mindestens zwei voneinander gegenüberliegenden Seiten in die Ventilkammer in gleicher axialer Position derselben mündende Zuführkanäle zugeordnet sind, die durch Drehung des Ventilkörpers wahlweise mit dem Einlaß in Flüssigkeitsverbindung bringbar sind.

Der Auslaßkanal und damit der diesem zugeordnete Abschnitt der Auslaßzone können also durch Umschalten des Ventils wahlweise mit der einen oder der anderen Bemusterungsflüssigkeit versorgt werden.

Dabei dient ein und dasselbe Ventil für das Ein- und Ausschalten mindestens zweier Zuleitungen, d.h. es halbiert sich die Zahl der benötigten Ventile, und es gelangt das Bemusterungsmittel ohne Schrägbohrungen in die Auslaßzone.

Als Bemusterungsmittel kommen in erster Linie Bemusterungsflüssigkeiten in Betracht, doch sind Bemusterungsmittel in Schaumform nicht ausgeschlossen. Die Bemusterung ist bei der bevorzugten Ausführungsform eine Färbung, insbesondere einer Teppichbahn.

Der Ausdruck "Auslaßzone" soll alle Arten von schlitzartigen Austrittskammern umfassen, die mit ihrem schmalen Querschnitt gegen die Warenbahn ausmünden. Die eigentliche Ausmündung kann über ihre ganze Erstreckung offen sein, also einen richtigen Schlitz bilden, oder andere Austrittskonfigurationen aufweisen, z.B. eine oder mehrere Lochreihen, Schlitzreihen, Drahtgitter u. dergl.

Als Anhaltspunkt für die Bemessung der zwischen der Schließstelle des Ventils und der äußeren Mündung der Auslaßzone verbleibenden Strecke kann gemäß Anspruch 2 ein Betrag von nicht mehr als 12 cm, vorzugsweise nicht mehr als 6 cm angesehen werden.

Gemäß Anspruch 3 weist das Ventil mindestens drei Betätigungsstellungen auf, in denen der Einlaß mit dem einen oder anderen Zuführkanal verbunden oder geschlossen ist.

In einer vorteilhaften Bauform gemäß Anspruch 4 weist das Ventil einen kugeligen Mittelteil auf, in dem der Einlaß ausgebildet ist. Dadurch ist die Möglichkeit geschaffen, den Einlaß aus einem Zuführkanal zu versorgen, während der andere Zuführkanal bzw. die anderen Zuführkanäle mit dem jeweiligen Rücklauf verbunden sind. Die den Zuführkanälen zugeordneten Pumpen könne also ohne Absperr-Druckänderungen weiterlaufen, wobei das Bemusterungsmittel der nicht mit dem Einlaß verbundenen Zuführleitung nicht auf die Warenbahn gelangt.

Bei der bevorzugten Ausführungsform sind die Ventile alle je für sich durch Einzelantriebe betätigbar (Anspruch 5).

Um den Eintritt der Bemusterungsflüssigkeit in die Auslaßzone unter definierten geometrischen Verhältnissen vonstatten gehen zu lassen, empfiehlt sich die Ausbildung nach Anspruch 6.

Zur Vergleichmäßigung des Austritts können gemäß Anspruch 7 der Auslaßzone an ihrer Austrittsmündung ein Lochblech, ein Schlitzblech, ein Gitter oder eine ähnliche mit einer Vielzahl von dicht beieinander befindlichen Austrittsöffnungen versehene Abdeckung vorgeschaltet sein. Die bauliche Ausführung nach Anspruch 8 erleichtert den Zugang zu den einzelnen Ventilen im Wartungs- oder Austauschfall.

Unter dem Aspekt der Zugänglichkeit der Auslaßzone bzw. des Austausches der Gleitfläche kann das Austrittsteil gemäß Anspruch 9 auf der Austrittsseite von einem die Gleitfläche bildenden abnehmbaren Schuh überdeckt sein.

Der Abstand der Ventile eines Auftragsbalkens in dessen Längsrichtung, also quer zur Bahn, voneinander und damit die Breite des von einem Ventil versorgten Bereichs der Auslaßzone können 20 bis 60 mm betragen (Anspruch 10). In Betracht kommende Teilungen sind insbesondere 25 und 50 mm. Die Feinheit der Teilung bestimmt auch die Feinheit einer mit der Vorrichtung hergestellten Bemusterung der Warenbahn.

Eine wichtige Ausgestaltung der Vorrichtung besteht darin, daß mehrere Auftragsbalken mit Ventilen und Auslaßzonen der vorstehend beschriebenen Art in Längsrichtung der Bahn hintereinander geschaltet sind (Anspruch 11).

Durch die Ergänzung oder Überlagerung der Aufträge der einzelnen Auftragsbalken kann die Bemusterungsvielfalt erhöht werden.

Die Vorrichtung kann eine Steuerung umfassen (Anspruch 12), mittels derer alle Ventile, also die Ventile eines Auftragsbalkens und bei Vorhandensein mehrerer Auftragsbalken alle Ventile aller Auftragsbalken mustermäßig betätigbar sind.

Die Steuerung bringt die Ventile nach einem bestimmten Programm oder nach einem Zufallsprogramm jeweils mit der einen oder anderen Bemusterungsflüssigkeit in Verbindung oder schließt die Ventile.

In der Zeichnung ist ein Ausführungsbeispiel der Erfindung schematisch dargestellt.
Fig. 1 zeigt eine Seitenansicht einer Vorrichtung mit einem Auftragsbalken;
Fig. 2 zeigt eine Ansicht nach der Linie II-II in Fig. 1;
Fig. 3 zeigt eine Ansicht nach der Linie III-III in Fig. 1;
Fig. 4 zeigt einen Querschnitt durch den Auftragsbalken;
Fig. 5 zeigt eine vergrößerte Wiedergabe des in Fig. 4 mit V bezeichneten Bereichs;
Fig. 6 ist eine schematische Darstellung der Musterentstehung;
Fig. 7,8 und 9 sind Beispiele für erzeugbare Muster.

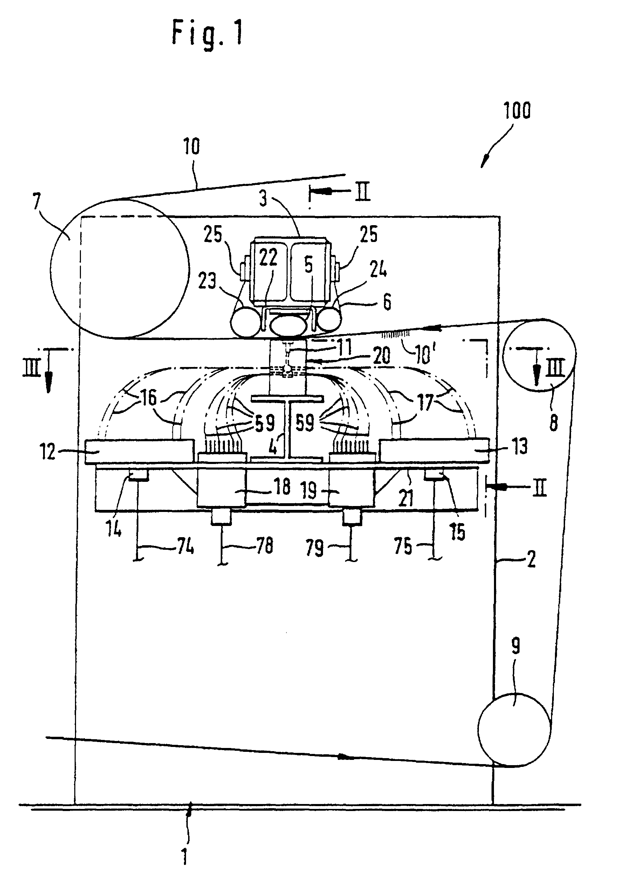

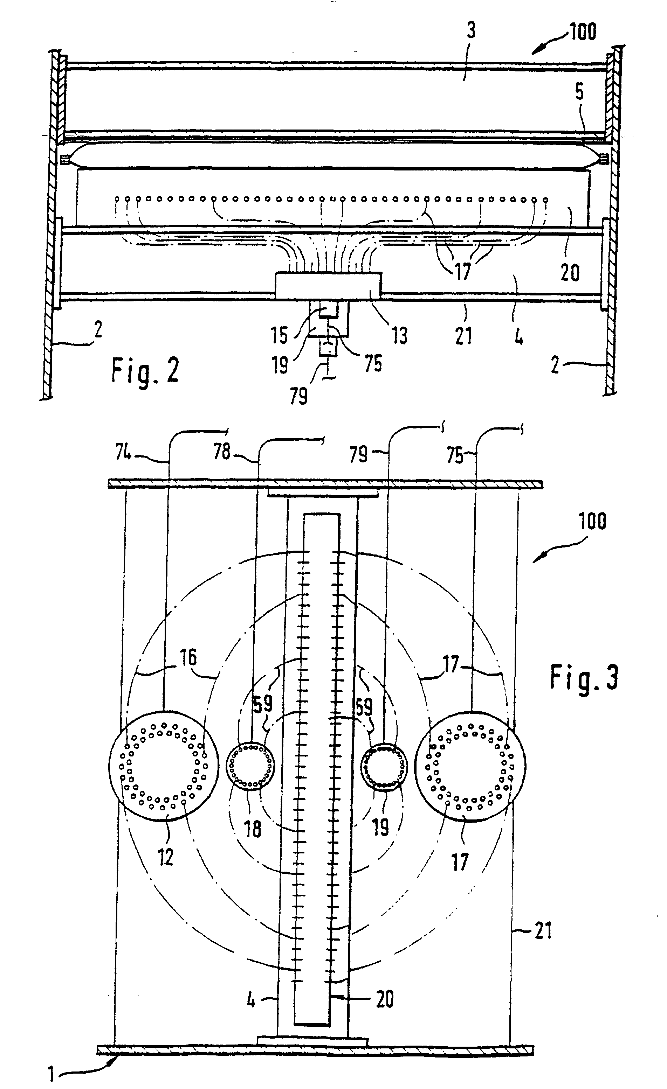

Die in den Fig. 1,3 und 4 als Ganzes mit 100 bezeichnete Vorrichtung umfaßt ein Maschinengestell 1 mit zwei seitlichen mit Querabstand einander gegenüberstehenden rechteckigen aufrechten Gestellplatten 2, die durch zwei im oberen Bereich übereinander angeordnete Querträger 3,4 miteinander verbunden sind, die als I-Träger ausgebildet sind, die mit ihrem Steg in der gleichen vertikalen und zu den Gestellplatten 2,2 senkrechten Ebene angeordnet sind. Der obere Querträger 3 bildet einen Stützbalken für ein unter ihm angeordnetes, sich zwischen den Gestellplatten 2,2 erstreckendes aufblasbares schlauchförmiges Druckkissen 5, unter welchem eine Gleitfolie 6 gespannt ist, gegen die das Druckkissen 5 gemäß den Fig. 1 und 3 von oben anliegt. Das Druckkissen 5 ist unter Belassung seitlichen Abstandes zwischen den Schenkeln eines nach unten offenen U-Profils 5' angeordnet, gegen die von außen zu dem Druckkissen 5 parallele Rohre 23,24 anliegen. Die Rohre 23,24 und das U-Profil 5' sind gemeinsam von der Gleitfolie 6 umschlungen, die mit ihren Rändern bei 25 an den Seiten des Querträgers 3 festgelegt ist. Auf diese Weise wurden Schwingungen des Druckkissens 5 und der Gleitfolie 6 in Laufrichtung der Warenbahn 10 vermieden.

Zwischen den Gestellplatten 2,2 sind in der Nähe eines vertikalen Randes in Höhe des Querbalkens 3 eine erste Umlenkwalze 7 und darunter am gegenüberliegenden vertikalen Rand übereinander zwei weitere Umlenkwalzen 8,9 angeordnet, von denen die Umlenkwalze 8 ihre Oberseite etwa in Höhe der Unterseite des Druckkissens 5 hat. Die Warenbahn 10 wird in der in Fig. 1 gezeigten Weise von unten um die Umlenkwalze 9 herum nach oben um die Umlenkwalze 8 und dann im wesentlichen horizontal mit dem Pol nach unten unter der Gleitfolie 6 hindurch um die Umlenkwalze 7 herum geführt, um dann gemäß Fig. 1 nach rechts aus der Vorrichtung 100 herausgeleitet zu werden.

Der mit Abstand unterhalb des Querbalkens 3 angeordnete Querbalken 4 dient als Stützbalken für den auf ihm angeordneten Auftragsbalken 20, der sich zwischen den Gestellplatten 2,2 senkrecht zu diesen fast über deren ganzen Abstand erstreckt.

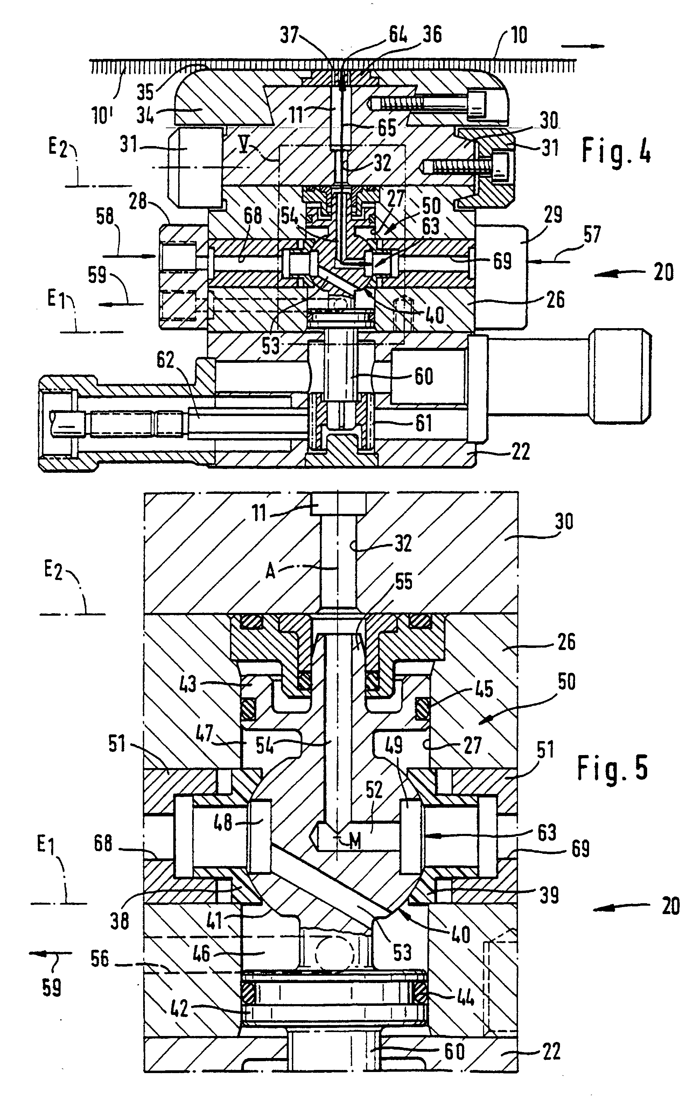

Der Auftragsbalken 20 wird im einzelnen anhand der Fig. 4 und 5 beschrieben. Er umfaßt eine in Fig. 1 nach oben offene, sich quer über die Breite der Warenbahn 10 erstreckende Auslaßzone 11, aus der ein Bemusterungsmittel, z.B. eine Färbeflüssigkeit, gemäß Fig. 1 nach oben in den Pol 10' der Warenbahn 10 austritt, die in dem Ausführungsbeispiel als Teppichbahn ausgebildet ist, wie durch den bei 10' wiedergegebenen Pol angedeutet ist. Die Warenbahn 10 läuft mit dem Pol 10' nach unten über die Auslaßzone 11.

Die Warenbahn 10 gleitet über die Oberseite des Auftragsbalkens 20 an der Auslaßzone 11 entlang, wobei dort Bemusterungsmittel in den Pol 10' der Warenbahn 10 hineingedrückt wird. Auf der der Auslaßzone 11 gegenüberliegenden Seite gleitet der Rücken der Warenbahn 10 an der durch das Druckkissen 5 elastisch hinterlagerten Gleitfolie 6 entlang. Der Austrittsbereich der Auslaßzone 11 wird also durch die Warenbahn 10 selbst seitlich abgedichtet, weil die Warenbahn 10 mit einem gewissen Druck gegen die Berandung der Auslaßzone 11 angedrückt wird.

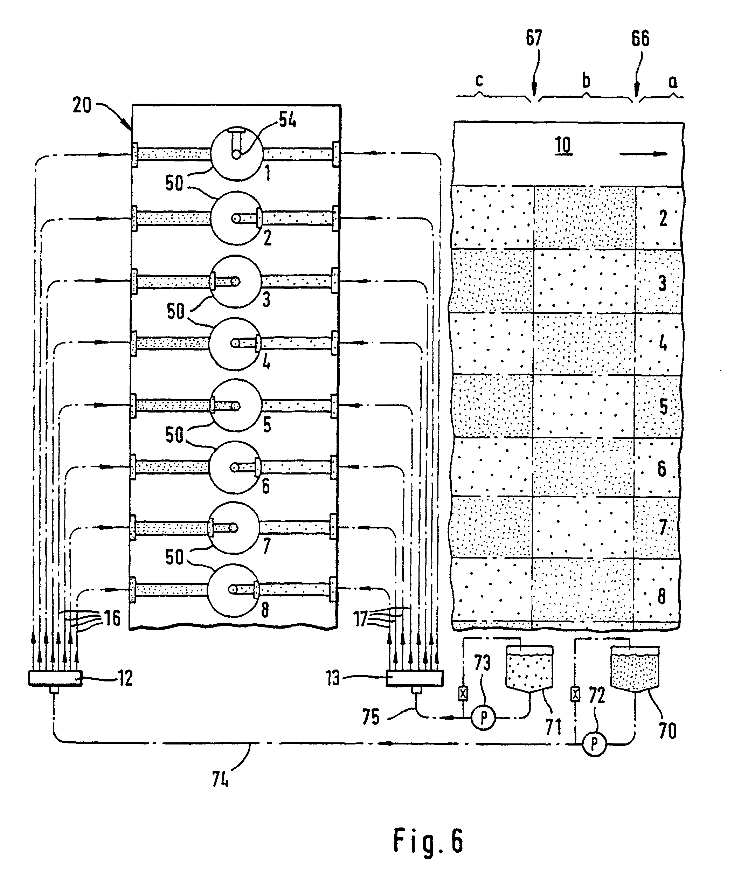

Dem Auftragsbalken 20 werden in dem Ausführungsbeispiel zwei Bemusterungsmittel aus entsprechenden Verteilern 12,13 zugeführt, die an den Anschlüssen 14,15 über Leitungen 74,75 mit entsprechenden Vorratsbehältern 70,71 in Verbindung stehen, aus denen die Bemusterungsmittel mittels Pumpen unter Druck herangeführt werden (Fig. 6). Die Bemusterungsmittel werden in den Verteilern 12,13 jeweils auf eine Vielzahl von einzelnen Leitungen 16 bzw. 17 aufgeteilt, die an über die Arbeitsbreite verteilten Stellen in den Auftragsbalken 20 münden.

18 und 19 sind Sammelköpfe, in die die in Zusammenhang mit den Fig. 4 und 5 beschriebenen Rückläufe 59 münden und aus denen das nicht aufgetragene Bemusterungsmittel über Leitungen 78,79 in die Vorratsbehälter 70,71 zurückgeführt oder in den Kanal abgeleitet wird. Die ganze Anordnung ist auf einer horizontalen Querplatte 21 unterhalb des Querträgers 4 angebracht.

Wie aus Fig. 4 ersichtlich ist, hat der Auftragsbalken 20 einen im wesentlichen rechteckigen aufrechten Querschnitt. Er besteht aus mehreren ihrerseits ebenfalls einen Rechteckquerschnitt aufweisenden Teilen, die übereinander angeordnet sind. Das unterste Teil 22 ist das Antriebsteil. Darauf ist das Ventilteil 26 befestigt, welches eine Vielzahl von zur Warenbahn 10 senkrechten, einander parallelen, quer zur Arbeitsbreite aufgereihten zylindrischen Ventilkammern 27 umfaßt, deren Achsen A sämtlich in der Austrittsebene, d.h. der zur Warenbahn 10 senkrechten Längsmittelebene des Auftragsbalkens 20 und insbesondere der schlitzförmigen Auslaßzone 11 gelegen sind.

Auf dem Ventilteil 26 ist das Austrittsteil 30 mittels Klemmstücken 31 befestigt. Das Austrittsteil 30 weist eine über die Arbeitsbreite durchgehende, gegen die Warenbahn 10 hin offene Auslaßzone 11 und an der Stelle jeder Ventilkammer 27 einen zu dieser koaxialen durch eine Bohrung gebildeten Zwischenkanal 32 auf.

Die Oberseite des Austrittsteils 30 ist von einem Gleitschuh 34 überdeckt, der eine Gleitfläche 35 bildet, auf der die Warenbahn 10 mit dem Pol 10' entlanggleitet. Der Gleitschuh 34 ist in der aus Fig. 4 ersichtlichen Weise geteilt und legt vor der Mündung der Auslaßzone 11 eine Lochplatte 36 fest, die im Querschnittsbereich der Auslaßzone 11 eine Vielzahl von dicht beieinander gleichmäßig verteilten feinen Durchgangsbohrungen 37 aufweist, durch die das in der Auslaßzone 11 anstehende Bemusterungsmittel gleichmäßig verteilt in die Warenbahn 10 übertritt.

In jeder Ventilkammer 27 ist ein Ventilkörper 40 drehbar angeordnet, der einen kugeligen Mittelteil 41 und zu beiden Seiten desselben in geringem axialen Abstand je einen scheibenförmigen Dichtsteg 42,43 mit einer gegen den Innenumfang der Ventilkammer 27 abdichtenden Umfangsdichtung 44,45 aufweist. Der Durchmesser des kugeligen Mittelteils 41 entspricht etwa dem der Ventilkammer 27.

Zwischen dem kugeligen Mittelteil 41 und den Dichtstegen 42,43 sind Ringräume 46,47 gebildet, die durch die Dichtstege 42,43 axial nach außen abgedichtet sind.

Der Ventilkörper 40 weist in seinem kugeligen Mittelteil 41 einander gegenüberliegende Anschlußstellen 48,49 auf, gegen deren Rand auf der Kugelfläche von außen eine kugelige Dichtfläche aufweisende Dichtbuchsen 38,39 anliegen. Die Dichtbuchsen 38,39 sind in Hülsen 51 angeordnet, die auf diametral einander gegenüberliegenden Seiten des kugeligen Mittelteils in dem Ventilteil 26 angebracht sind und Zuleitungskanäle 68,69 bilden. Die Hülsen 51 gehen durch das Ventilteil 26 bis nach außen hindurch und stellen die Verbindung zu Anschlußstücken 28,29 her, die an den beiden einander gegenüberliegenden Seiten des Ventilteils 26 befestigt sind.

Die geschilderte Ausführungsform betrifft den Fall, daß jedem Ventil 50 zwei Bemusterungsmittel an zwei Zuleitungskanälen 68,69 zuführbar sind. Dies ist zwar der praktisch wichtigste Fall, doch wäre es grundsätzlich auch möglich, wenn auch konstruktiv schwieriger, jedes Ventil 50 mit mehr als zwei Bemusterungsmitteln zu beaufschlagen.

Von der Einlaßstelle 49 (Fig. 5) geht ein durch eine bezüglich des Kugelmittelpunktes M radiale Bohrung gebildeter Einlaß 52 bis zur Mitte des kugeligen Teils und dort in einen in Achsrichtung des Ventilkörpers 40 verlaufenden Auslaßkanal 54 über, der sich in einem stutzenartigen Ansatz 55 bis über die äußere Stirnseite des Dichtsteges 43 hinaus erstreckt und mit dem dortigen Zwischenkanal 32 in dem Austrittsteil 30 fluchtet. Der Durchmesser des Zwischenkanals 32 ist etwas größer als der des Austrittskanals 54.

Von der gegenüberliegenden Einlaßstelle 48 führt ein Schrägkanal 53 in den dem Auslaßkanal 54 bezüglich des Kugelmittelpunktes M gegenüberliegenden Ringraum 46, der seinerseits über einen gestrichelt wiedergegebenen Kanal 56 mit dem Anschlußstück 28 und dem Rücklauf 59 in Verbindung steht.

In der in den Fig. 4 und 5 dargestellten Arbeitsphase wird dem Anschlußstück 29 aus einem der Vorratsbehälter 70,71 über einen der Verteiler 12,13 an einem Zulauf 57 ein erstes Bemusterungsmittel zugeführt, das über den Zuführkanal 69 in der Hülse 51, den Einlaß 52, den Auslaßkanal 54, den Zwischenkanal 32 und die Auslaßzone 11 auf die Warenbahn 10 übertragen wird. Die Pumpen 72,73 beider Bemusterungsmittel laufen ständig. Während der Zuführung zur Warenbahn 10 über den Zulauf 57 wird also auch über den Zulauf 58 das andere Bemusterungsmittel zugeführt. Es gelangt jedoch über den Zuleitungskanal 68, die Einlaßstelle 48 und den Schrägkanal 53 in den Ringraum 46 und von dort über den Kanal 56 sogleich wieder in den Rücklauf 59, d.h. es zirkuliert in seinem Leitungssystem oder wird abgeleitet. Auf diese Weise können die Pumpen 72,73 kontinuierlich weiterlaufen, ohne daß es Druckstöße in den Bemusterungsflüssigkeiten gibt.

Soll das andere Bemusterungsmittel auf die Warenbahn 10 gelangen, wird der Ventilkörper 40 in der Ventilkammer 27 um 180° gedreht, so daß die Einlaßstelle 49 nunmehr mit dem Zulauf 58 verbunden ist und das an dem Zulauf 57 zugeführte Bemusterungsmittel in den Rücklauf 59 gelangt.

Der Antrieb bei dieser Umschalt-Drehbewegung erfolgt über einen in der Achse des Ventilkörpers 40 angeordneten, in den Antriebsteil 22 hineinreichenden koaxialen Antriebszapfen 60, der am Ende ein Ritzel 61 trägt, welches auf eine beliebige Weise von einem seitlich in den Antriebsteil 22 eingreifenden Antriebsglied 62 betätigbar ist. Für die Erfindung spielt die Art, wie die Drehung des Ritzels 61 erzeugt wird, weiter keine Rolle. Das Antriebsglied 62 kann eine zahnstangenartige Struktur aufweisen und einen Längshub ausführen. Es ist aber auch möglich, daß sich das Antriebsglied 62 dreht und mit dem Ritzel 61 einen Schneckentrieb bildet.

Wichtig ist, daß die durch den Pfeil 65 wiedergegebene Strecke von der Schließstelle 63 des Ventilkörpers 40 bis zur Austrittsstelle 64 der Auslaßzone 11 an der Warenbahn 10 so kurz ist, wie sich dies konstruktiv einrichten läßt. Die Strecke beläuft sich in dem Ausführungsbeispiel auf etwa 6 cm. Die Strecke 65 ist durch die Ausdehnung des Ventilkörpers 40 und die Ausdehnung des Austrittsteils 30 vorgegeben, wobei in Letzterem die Auslaßzone 11 aufgrund des Druckausgleichs und der gleichmäßigen nicht zur Querströmungen neigenden Verteilung des Bemusterungsmittels einen gewissen Querschnitt und somit eine gewisse Tiefe aufweisen muß.

In Fig. 6 ist ein Betriebsbeispiel wiedergegeben, bei welchem auf der Warenbahn 10 eine Bemusterung mit rechteckigen Musterfeldern erzeugt wird. Es ist das eine Ende des Auftragsbalkens 20 mit den ersten acht entsprechend numerierten Ventilen 50 dargestellt. Das äußerste in Fig. 6 oben dargestellte Ventil 1 nimmt die 90°-Stellung ein, d.h. es ist geschlossen. In seinem Bereich wird kein Bemusterungsmittel auf die Warenbahn 10, die in Fig. 6 rechts dargestellt ist, abgegeben. Dies liegt daran, daß der unregelmäßig konturierte Rand der Warenbahn 10 frei von Bemusterungsmittel bleiben soll bzw. daß kein Bemusterungsmittel außerhalb des Randes der Warenbahn 10 austreten soll.

Dargestellt ist in dem linken Teil der Fig. 6 die Betriebsphase, die dem Auftrag auf den Abschnitt a der Warenbahn 10 entspricht. Hierbei erhalten die Ventile 2,4,6,8 Bemusterungsmittel aus dem Verteiler 13 und übertragen es auf die Warenbahn 10. Dies ist durch eine weite Punktierung wiedergegeben. Die Ventile 3,5 und 7 hingegen haben Bemusterungsmittel aus dem Verteiler 12 enthalten, was durch eine dichte Punktierung wiedergegeben ist.

An der Stelle 66 erfolgte ein Umschalten. Die bisher von dem Verteiler 13 versorgten Ventile 2,4,6,8 erhielten nunmehr während des Durchlaufs des Abschnittes b Bemusterungsmittel aus dem Verteiler 12, was durch die dichte Punktierung wiedergegeben wird. Die dazwischen liegenden Ventile 3,5,7 erhielten Bemusterungsmittel aus dem Verteiler 13. An der Stelle 67 erfolgte ein erneutes Umstellen, so daß in dem Abschnitt c die Aufteilung der Felder wieder wie in dem Abschnitt a war. Alle Ventile 50 sind einzeln betätigbar, d.h. ihre Ventilkörper 40 können über ihre jeweils zugeordneten Antriebe 60,61,62 unabhängig von den anderen Ventilen 50 verdreht werden. Die Umsteuerung bei der Vielzahl von Ventilen erfolgt zweckmäßig durch eine geeignete Programmsteuerung.

Wenn mit der Vorrichtung uni gefärbt wird, erhalten alle Ventile 50 das gleiche Bemusterungsmittel, d.h. die gleiche Färbeflotte. Ein Umschalten der Ventile erfolgt während des Unifärbens nicht. Nur wenn auf eine andere Farbe übergegangen werden soll, werden alle Ventile gleichzeitig auf die neue Färbeflotte umgeschaltet.

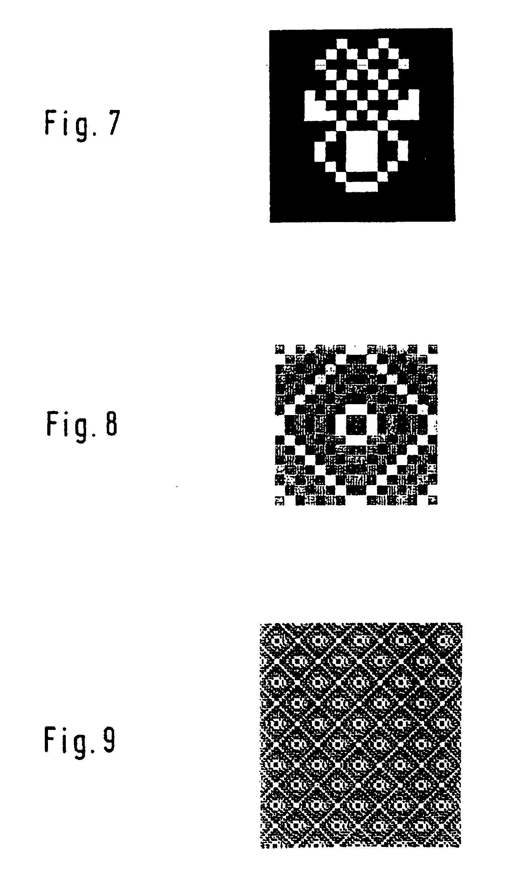

Eine Bemusterung muß nicht in der regelmäßigen schachbrettartigen Weise der Fig. 6 erfolgen. Es können durch geeignete Ansteuerung der Ventile 50 auch über die Fläche der Warenbahn 10 verteilte Einzelmuster etwa nach Fig. 7 erzeugt werden.

Auch kann die Vorrichtung 100 mehrere in Laufrichtung der Warenbahn 10 gestaffelt hintereinander angeordnete Auftragsbalken 20 umfassen, die nacheinander Bemusterungsmittel an die Warenbahn 10 abgeben. Mit einer solchen Anordnung können auch mehr als zwei verschiedene Bemusterungsmittel verarbeitet werden. Es versteht sich, daß die Steuerung dabei auf den richtigen Rapport zwischen den einzelnen Auftragsbalken 20 zu achten hat. Erzeugt werden können auf diese Weise Bemusterungen etwa nach Fig. 8, was in verkleinerter Form auf einem Teppich etwa so aussieht, wie es aus Fig. 9 ersichtlich ist.

## Patentansprüche

1. Vorrichtung (100) zum Auftragen eines Bemusterungsmittels auf eine in ihrer Längsrichtung vorlaufende Bahn (10), insbesondere einer Färbeflüssigkeit auf eine Teppichbahn,
mit einem quer zur Bahn (10) parallel zu deren Oberfläche verlaufenden, mit einer Gleitfläche (35) für die vorbeilaufende Bahn (10) versehenen Auftragsbalken (20),
mit einer in dem Auftragsbalken (20) ausgebildeten, über die Arbeitsbreite durchgehenden, in der Gleitfläche (35) ausmündenden schlitzartigen Auslaßzone (11) für das Bemusterungsmittel,
mit einer der Auslaßzone (11) auf der anderen Seite der Bahn (10) gegenüberliegenden Abstützung (3,5,6) für die an der Auslaßzone (11) vorbeilaufende Bahn
und mit einer ventilgesteuerten Zuführung für das Bemusterungsmittel zu der Auslaßzone (11), die eine Vielzahl von längs der Auslaßzone (11) in die Auslaßzone (11) mündenden einzelnen Zuleitungen (16,17) umfaßt, wobei
in dem Strömungsweg jeder Zuleitung (16,17) in dem Auftragsbalken (20) unmittelbar vor der Einmündung des Strömungsweges in die Auslaßzone (11) ein Ventil (50) angeordnet ist,
**dadurch gekennzeichnet,**
**daß** das Ventil (50) einen drehbetätigbaren Ventilkörper (40) mit einem in der Drehachse (A) gelegenen, von der der Ausmündung der Auslaßzone (11) gegenüberliegenden Seite her in die Auslaßzone (11) mündenden Auslaßkanal (54) und mindestens einem seitlichen, mit dem Auslaßkanal (54) verbundenen Einlaß (52) aufweist und die Drehachse (A) in der Mittelebene der Auslaßzone (11) senkrecht zur Bahnebene gelegen ist,
**daß** der Ventilkörper (40) in einer zylindrischen, zu der zur Bahn (10) senkrechten Drehachse (A) koaxialen Ventilkammer (27) des Auftragsbalkens (20) angeordnet ist,
**daß** jedem Ventil (50) mindestens zwei von einander gegenüberliegenden Seiten in die Ventilkammer (27) in gleicher axialer Position derselben mündende Zuführkanäle (68,69) zugeordnet sind, die durch Drehung des Ventilkörpers (40) wahlweise mit dem Einlaß (52) in Flüssigkeitsverbindung bringbar sind.

2. Vorrichtung nach Anspruch 1, **dadurch gekennzeichnet, daß** die in Strömungsrichtung des Bemusterungsmittels gemessene Strecke (65) von der Schließstelle (63) des Ventils (50) bis zur äußeren Mündung (64) der Auslaßzone (11) nicht mehr als 12 cm, vorzugsweise nicht mehr als 6cm beträgt.

3. Vorrichtung nach Anspruch 1 oder 2, **dadurch gekennzeichnet, daß** das Ventil (50) mindestens drei Betätigungsstellungen aufweist, in denen der Einlaß (52) mit dem einen oder anderen Zuführkanal (68,69) verbunden oder geschlossen ist.

4. Vorrichtung nach einem der Ansprüche 1 bis 3, **dadurch gekennzeichnet, daß** der Ventilkörper (40) einen kugeligen Mittelteil (41) mit in einer zur Drehachse (A) senkrechten Mittelebene um die Drehachse (A) verteilt angeordneten Anschlußstellen (48,49) aufweist, die mit dem Einlaß (52) bzw. mindestens einem Schrägkanal (53) in dem kugeligen Mittelteil (41) in Verbindung stehen und durch Drehung des Ventilkörpers (40) derart mit dem einen oder anderen Zuführkanal (68,69) zur Deckung bringbar sind, daß alle Anschlußstellen (48,49) jeweils einem Zuführkanal (68,69) gegenüberstehen und daß an dem kugeligen Mittelteil (41) auf jeder Seite, in Achsrichtung des Ventilkörpers (40) gesehen, in der zylindrischen Ventilkammer zusammenwirkende Dichtstege (42,43) vorgesehen sind, die jeweils durch eine Querschnittsverengung des Ventilkörpers (40) von dessen kugeligem Mittelteil (41) getrennt sind, und daß der Schrägkanal (53) in eine (46) der Querschnittsverengungen ausmündet und daß von der Ventilkammer (27) im Bereich dieser Querschnittsverengung (46) ein Rücklauf (59) ausgeht.

5. Vorrichtung nach einem der Ansprüche 1 bis 4, **dadurch gekennzeichnet, daß** die Ventile (50) sämtlich je für sich durch Einzelantriebe betätigbar sind und daß der Ventilkörper (40) jedes Ventils (50) auf der der Mündung des Auslaßkanals (54) abgelegenen Seite einen zu der Achse (A) des Ventilkörpers (40) koaxialen Antriebszapfen (60) aufweist, an dem der jeweilige Einzelantrieb angreift.

6. Vorrichtung nach einem der Ansprüche 1 bis 5, **dadurch gekennzeichnet, daß** dem Austrittskanal (54) des Ventilkörpers (40) in Austrittsrichtung in dem Auftragsbalken (20) ein koaxialer zylindrischer Zwischenkanal (32) mit mindestens dem gleichen Durchmesser vorgelagert ist, der in die über die Auftragsbreite mit gleichbleibendem Querschnitt durchgehende Auslaßzone (11) einmündet.

7. Vorrichtung nach einem der Ansprüche 1 bis 6, **dadurch gekennzeichnet, daß** der Auslaßzone (11) an ihrer Austrittsmündung (64) ein Lochblech (36), ein Schlitzblech, ein Gitter oder dergleichen vorgeschaltet ist.

8. Vorrichtung nach Anspruch 6 oder 7, **dadurch gekennzeichnet, daß** das die Zwischenkanäle (32) und die Auslaßzone (11) enthaltende Austrittsteil (30) entlang einer zur Achse der Ventilkammern (27) senkrechten, das Ende der Ventilkammern (27) bildende Ebene (E₂) von dem Auftragsbalken (20) abnehmbar ist.

9. Vorrichtung nach Anspruch 8, **dadurch gekennzeichnet, daß** das Austrittsteil (30) auf der Austrittsseite von einem die Gleitfläche (35) bildenden abnehmbaren Schuh (34) überdeckt ist.

10. Vorrichtung nach einem der Ansprüche 1 bis 9, **dadurch gekennzeichnet, daß** die Breite des von einem Ventil (50) versorgten Bereichs der Auslaßzone (11) 20 bis 60 mm beträgt.

11. Vorrichtung nach einem der Ansprüche 1 bis 10, **dadurch gekennzeichnet, daß** mehrere Auftragsbalken (20) mit Ventilen (50) und Auslaßzone (11) in Laufrichtung der Bahn (10) hintereinander geschaltet sind.

12. Vorrichtung nach einem der Ansprüche 1 bis 1, **dadurch gekennzeichnet, daß** sie eine Steuerung umfaßt, mittels derer alle Ventile (50) unabhängig voneinander mustermäßig betätigbar sind.

## Claims

1. A device (100) for applying a pattern-forming agent to a web (10) extending in the longitudinal direction thereof, more particularly for applying a dye liquor to a length of carpet,
comprising an applicator beam (20) extending transversely to the web (10) and parallel to its surface and provided with a sliding surface (35) for the web (10) moving past it,
comprising a slot-like outlet zone (11) formed in the applicator beam (20), extending across the working width and opening into the sliding surface (35) for the pattern-forming agent,
comprising a support (3, 5, 6) opposite the outlet zone (11) on the other side of the web (10) and supporting the web as it moves past the outlet zone (11), and
comprising a valve-controlled means for supplying the pattern-forming agent to the outlet zone (11), comprising a number of individual feed lines (16, 17) disposed along and opening into the outlet zone (11), wherein
a valve (50) in the flow path of each feed line (16, 17) is disposed in the applicator beam (20) directly in front of the place where the flow path opens into the outlet zone (11),
**characterised in that**
the valve (50) has a valve member (40) actuated by rotation and comprising an outlet duct (54) disposed along the axis of rotation (A) and opening into the outlet zone (11) from the side opposite the mouth of the outlet zone (11) and also comprising a lateral inlet (52) connected to the outlet duct (54), and the axis of rotation (A) is situated in the central plane of the outlet zone (11) at right angles to the plane of the web,
the valve member (40) is disposed in a cylindrical valve chamber (27) of the applicator beam (20) coaxial with the axis of rotation (A) at right angles to the web (10), and
each valve (50) is associated with at least two supply ducts (68, 69) opening into the valve chamber (27) from opposite sides in the same axial position thereof and brought when required into flow connection with the inlet (52) by rotating the valve member (40).

2. A device according to claim 1, **characterised in that** the distance (65), measured in the direction of flow of the pattern-forming agent, from the closing place (63) of the valve (50) to the outer mouth (64) of the outlet zone (11) is not more than 12 cm, preferably not more than 6 cm.

3. A device according to claim 1 or 2, **characterised in that** the valve (50) has at least three operating positions, in which the inlet (52) is connected to one or the other supply duct (68, 69) or is closed.

4. A device according to any of claims 1 to 3, **characterised in that** the valve member (40) has a spherical central part (41) with connecting places (48, 49) distributed around the axis of rotation (A) in a central plane at right angles to the said axis (A), the connecting places being connected to the inlet (52) or to at least one sloping duct (53) in the spherical central part (41) and being brought by rotating the valve member (40) into alignment with one or the other supply duct (68, 69) such that all the connecting places (48, 49) are opposite a respective supply duct (68, 69) and co-operating sealing webs (42, 43) are provided in the cylindrical valve chamber on the spherical central part (41) on each side in the axial direction of the valve member (40) and are each separated from the spherical central part (41) by a constriction in the cross-section of the valve member (40), and the sloping duct (53) opens into one (46) of the constrictions in cross-section and a return pipe (59) extends from the valve chamber (27) in the region of the constriction (46).

5. A device according to any of claims 1 to 4, **characterised in that** each valve (50) can be actuated by an individual drive and the valve member (40) of each valve (50), on the side remote from the mouth of the outlet duct (54), has a drive journal (60) coaxial with the axis (A) of the valve member (40) and engaging the respective individual drive.

6. A device according to any of claims 1 to 5, **characterised in that** a coaxial cylindrical intermediate duct (32) having at least the same diameter as the outlet duct (54) of the valve member (40) is situated in front of the outlet duct (54) in the outlet direction in the applicator beam (20) and opens into the outlet zone (11) which has a uniform cross-section and is continuous across the application width.

7. A device according to any of claims 1 to 6, **characterised in that** a perforated plate (36), a slotted plate, a grid or the like is disposed in front of the outlet zone (11) at the mouth (64) thereof.

8. A device according to claim 6 or 7, **characterised in that** the outlet part (30) containing the intermediate ducts (32) and the outlet zone (11) is removable from the applicator beam (20) along a plane (E₂) at right angles to the axis of the valve chambers (27) and forming the end of the said valve chambers (27).

9. A device according to claim 8, **characterised in that** the outlet part (30) is covered on the outlet side by a removable shoe (34) forming the sliding surface (35).

10. A device according to any of claims 1 to 9, **characterised in that** the width of the region of the outlet zone (11) supplied by a valve (50) is 20 to 60 mm.

11. A device according to any of claims 1 to 10, **characterised in that** a number of applicator beams (20) with valves (50) and an outlet zone (11) are connected one behind the other in the direction of advance of the web (10).

12. A device according to any of claims 1 to 1, **characterised in that** it comprises a control means whereby all valves (50) can be actuated independently of one another and in accordance with a pattern.

## Revendications

1. Dispositif d'application d'un agent de réalisation d'un modèle sur une bande (10) se déroulant selon sa direction longitudinale, notamment d'un bain de teinture sur une bande de tapis, comprenant :
- une poutre d'application (20) transversale par rapport à la bande (10) et parallèle à la surface de celle-ci, équipée dune portée de glissement (35) sur laquelle défile la bande (10),
- une zone d'échappement (11) dans la poutre d'application (20), traversant toute la largeur de travail de l'agent de réalisation de modèle, en forme de fente débouchant dans la portée de glissement (35),
- en face de la zone d'échappement (11), mais de l'autre côté de la bande (10), un appui (3, 5, 6) pour soutenir celle-ci dans son défilement le long de la zone (11),
- commandée par une soupape, une amenée à la zone d'échappement (11) de l'agent de réalisation de modèle, comprenant un certain nombre de conduites d'amenée (16, 17) individuelles débouchant dans cette zone (11) le long de celle-ci, chaque conduite (16, 17) contenant, dans son passage à travers la poutre d'application (20), une soupape (50) placée directement avant l'embouchure de la conduite dans la zone d'échappement (11),
**caractérisé en ce que**
- la soupape (50) possède un corps de soupape (40) pouvant être entraîné en rotation et présentant percé selon son axe de rotation (A), un canal d'échappement (54) débouchant dans la zone d'échappement (11) du côté opposé à la sortie de cette zone, ainsi qu'au moins une entrée latérale (52) reliée au canal (54), l'axe de rotation (A) étant situé dans le plan médian de la zone d'échappement (11), perpendiculairement au plan de la bande,
- le corps de soupape (40) est monté dans une chambre de soupape (27) de la poutre d'application (20), cylindrique et coaxiale à l'axe de rotation (A),
- à chaque soupape (50) sont associés au moins deux canaux d'amenée (68, 69) débouchant de deux côtés opposés danns la chambre de soupape (27) avec une même position axiale, la rotation du corps de soupape (40) permettant d'amener l'entrée (52) en liaison liquide au choix avec l'un ou l'autre des canaux.

2. Dispositif selon la revendication 1
**caractérisé en ce que**
le parcours (65) qu'effectue l'agent de réalisation de modèle s'écoulant entre le point de fermeture (63) de la soupape (50) et l'embouchure externe (64) de la zone d'échappement (11) ne dépasse pas 12 cm, et de préférence 6 cm.

3. Dispositif selon l'une des revendications 1 ou 2,
**caractérisé en ce que**
la soupape (50) présente au moins trois positions de fonctionnement, dans lesquelles l'entrée (52) est reliée à l'un ou à l'autre des canaux d'amenée (68, 69), ou est fermée.

4. Dispositif selon l'une quelconque des revendications 1 à 3,
**caractérisé en ce que**
- le corps de soupape (40) présente une partie centrale (41) sphérique, avec dans un plan médian perpendiculaire à l'axe de rotation A, des points de raccordement (48, 49) répartis autour de cet axe et reliés à l'entrée (52) ou à au moins un canal oblique (52) percé dans la partie centrale sphérique (41),
- la rotation du corps de soupape (40) permet d'amener en recouvrement avec l'un ou l'autre des canaux d'amenée (68, 69) les points de raccordement (48, 49), de sorte que chaque fois ceux-ci se trouvent en face d'un canal d'amenée (68, 69),
- sur la partie médiane sphérique (41) et de chaque côté selon la direction axiale du corps de soupape (40) se trouve une barrette d'étanchéité (42, 43) coopérant avec la chambre cylindrique de soupape, chaque barrette étant reliée à la partie centrale sphérique (41) du corps de soupape (40) par une réduction de section,
- le canal oblique (53) débouche dans Tune (46) des réductions de section, et de la chambre (27) dans la zone de cette réduction 46 part un circuit de retour (59).

5. Dispositif selon l'une quelconque des revendications 1 à 4,
**caractérisé en ce que**
les soupapes (50) peuvent être actionnées ensemble, chacune par un entraînement individuel, le corps (40) de chaque soupape (50) présentant du côté opposé au canal d'échappement (54) un pivot d'entraînement (60) de même axe (A) que le corps de soupape (40) et en prise avec l'entraînement individuel correspondant.

6. Dispositif selon l'une quelconque des revendications 1 à 5,
**caractérisé en ce qu'**
en aval du canal de sortie (54) du corps de soupape (40) par rapport à la direction d'écoulement, il est prévu dans la poutre d'application (20) un canal intermédiaire cylindrique coaxial (32) ayant au moins le même diamètre et débouchant dans la zone d'échappement (11) couvrant en continu la largeur d'application avec une section constante.

7. Dispositif selon l'une quelconque des revendications 1 à 6,
**caractérisé en ce que**
dans la zone d'échappement (11), le long de son embouchure de sortie (64) est montée une tôle perforée (36), une tôle à fentes, une grille ou similaire.

8. Dispositif selon la revendication 6 ou 7,
**caractérisé en ce que**
les canaux intermédiaires (32) et la partie de sortie (30) contenant la zone d'échappement (11) peuvent être séparés de la poutre d'application (20) le long d'un plan (E₂) perpendiculaire à l'axe des chambres de soupape (27) et définissant les extrémités des chambres de soupape (27).

9. Dispositif selon la revendication 8,
**caractérisé en ce que**
la partie de sortie (30), du côté sortie, est recouverte par une semelle amovible (34) constituant la portée de glissement (35).

10. Dispositif selon l'une quelconque des revendications 1 à 9,
**caractérisé en ce que**
la largeur de la partie de la zone d'échappement (11) qui est alimentée par une soupape (50) est de 20 à 60 mm.

11. Dispositif selon l'une quelconque des revendications 1 à 10,
**caractérisé en ce que**
plusieurs poutres d'application (20) équipées de soupapes (50) et d'une zone d'application (11) sont disposées les unes derrière les autres par rapport à la direction d'avancement de la bande (10).

12. Dispositif selon l'une quelconque des revendications 1 à 11,
**caractérisé en ce qu'**
il comprend une commande par laquelle toutes les soupapes (50) peuvent être actionnées indépendamment les unes des autres, en fonction de modèle à reproduire.
